# EUROPEAN PATENT APPLICATION

(11) **EP 1 783 393 A2**
(43) Date of publication of application: **09.05.2007**
(21) Application number: 06255626.1
(22) Date of filing: 01.11.2006
(51) Int. Cl.: F16D 48/08

(54) **Control device and control method for vehicle**

(30) Priority: 04.11.2005 JP 2005321232
(71) Applicant: TOYOTA JIDOSHA KABUSHIKI KAISHA, Toyota-shi, Aichi-ken 471-8571 (JP)
(72) Inventor: Nishizawa, Jun c/o Toyota Jidosha K.K., Aichi-ken 471-8571 (JP)
(74) Representative: Harris, Ian Richard

(57) **Abstract**

An ECU executes a program including the steps of sensing a slope of a lane if an estimated temperature T of a clutch is higher than a predetermined threshold value (1) (YES in S100) (S102), calculating running resistance and friction resistance (S104), performing torque demand control (S106), controlling the clutch such that the clutch is engaged (S108), and performing normal control if the estimated temperature T of the clutch is lower than a predetermined threshold value (2) (YES in S110) (S112).

## Description

This nonprovisional application is based on Japanese Patent Application No. 2005-321232 filed with the Japan Patent Office on November 4, 2005, the entire contents of which are hereby incorporated by reference.

### BACKGROUND OF THE INVENTION

### Field of the Invention

The present invention relates to a control device and a control method for a vehicle, and particularly to control of a clutch and an internal combustion engine when the vehicle runs at a low speed.

### Description of the Background Art

There has conventionally been performed automatic control, in which a clutch provided between an engine and a transmission is activated by an actuator or the like. When the vehicle, which is provided with such a clutch, starts moving or runs at a low speed, the clutch is controlled to be in a semi-engaged state so as to prevent engine stall. However, if the vehicle repeatedly starts and stops or the low vehicle speed is maintained, and the semi-engaged state thereby continues, heat is generated at an engaging portion between an input shaft and an output shaft, which heat is caused by slippage. If the generated heat causes a high temperature of the engaging portion, functions of the clutch may significantly be deteriorated owing to overheat.

In view of such a problem, Japanese Patent Laying-Open No. 09-250569 discloses an automatic clutch control device for a vehicle, the control device effectively suppressing heat generation caused by slippage of the automatic clutch. The clutch control device for the vehicle is an automatic clutch control device capable of allowing and interrupting transmission of a driving force generated by an engine of the vehicle, and electrically controlling an engaged state of the clutch. The control device includes clutch temperature detecting means for detecting a temperature of the automatic clutch, and slippage amount control means for controlling a slippage amount of the automatic clutch. When the temperature of the automatic clutch exceeds a prescribed temperature, the slippage amount control means reduces the time during which the automatic clutch is brought into a completely engaged state from a released state to reduce a slippage amount, and reduces a driving torque generated by the engine.

According to the automatic clutch control device for the vehicle disclosed in the above-described publication, when the temperature of the automatic clutch exceeds a prescribed temperature, a slippage amount of the automatic clutch is reduced. Furthermore, a driving force exerted on the automatic clutch from the engine is reduced, and hence it is possible to effectively suppress heat generation caused by slippage of the automatic clutch. Furthermore, when it is determined that the automatic clutch is in the completely engaged state, control for reducing a driving torque generated by the engine is halted, and hence it is possible to effectively suppress overheat of the automatic clutch, and minimize deterioration in accelerating performance of the vehicle when it starts moving.

As to the automatic clutch control device for the vehicle disclosed in the above-described publication, however, it is only described that control for reducing a driving torque is halted when the clutch is completely engaged. Accordingly, it is unclear whether or not a sufficient torque is produced at that time from the engine, and hence the engine may stall depending on variations in load imposed on a driving wheel. For example, if the vehicle runs on a climbing lane with a steep slope at a low speed, running resistance is increased so that a load imposed on the driving wheel is increased. At that time, when the clutch is controlled to be in an engaged state because of the temperature rise thereof, an output torque of the engine becomes insufficient, which may result in engine stall. If an output of the engine is unnecessarily increased to prevent engine stall, fuel efficiency may be deteriorated.

### SUMMARY OF THE INVENTION

An object of the present invention is to provide a control device and a control method for a vehicle, the device and the method suppressing overheat of a clutch and preventing stalling of an internal combustion engine. Another object of the present invention is to further provide a control device and a control method for a vehicle, the device and the method appropriately increasing an output of the internal combustion engine when the clutch is engaged, so as to suppress deterioration in fuel efficiency.

A control device for a vehicle according to an aspect of the present invention is a control device for a vehicle incorporating an internal combustion engine, a transmission receiving power transmitted from the internal combustion engine, a clutch interposed between an output shaft of the internal combustion engine and an input shaft of the transmission to allow and interrupt torque transmission, and an actuator controlling the clutch. The control device includes: a determination unit determining whether or not a temperature of an engaging portion between the input shaft and the output shaft in the clutch is not lower than a predetermined temperature; a control unit controlling the actuator such that the engaging portion is brought into an engaged state, when it is determined that the temperature of the engaging portion is not lower than the predetermined temperature while the engaging portion is in a semi-engaged state; and an internal combustion engine control unit controlling the internal combustion engine such that a torque at least not causing a stop of the internal combustion engine is produced, when the actuator is controlled such that the engaging portion is brought into the engaged state.

With an embodiment of the invention, when a vehicle runs on a climbing lane with a steep slope at a low speed, running resistance is increased, and hence, if the internal combustion engine is controlled such that the torque corresponding to the driving force larger than the additional value obtained by adding the increased running resistance and the frictional resistance on the power transmission path from the internal combustion engine to the driving wheel, it is possible to produce a torque not causing a stop of the internal combustion engine. As a result, stalling of the internal combustion engine can be prevented when the clutch is engaged. Furthermore, if it is determined that the clutch is at a temperature equal to or above the predetermined temperature, the clutch can be controlled to be brought into the engaged state from the semi-engaged state. Accordingly, heat generation caused by slippage can be suppressed so that functional deterioration of the clutch due to overheat can be suppressed. It is therefore possible to provide a control device for a vehicle, the control device suppressing overheat of the clutch and preventing stalling of the internal combustion engine.

Preferably, the internal combustion engine control unit controls the internal combustion engine such that a torque corresponding to a driving force at least larger than an additional value obtained by adding running resistance of the vehicle and frictional resistance on a power transmission path from the internal combustion engine to a driving wheel is produced.

In an embodiment of the present invention, since the torque not causing a stop of the internal combustion engine can be produced, stalling of the internal combustion engine can be prevented when the clutch is engaged. If the torque corresponding to the driving force at least larger than the additional value obtained by adding the running resistance and the friction resistance is produced, stalling of the internal combustion engine can be prevented, and hence there is no need for producing an excessive torque. Accordingly, it is possible to provide a control device for a vehicle, the control device appropriately increasing an output of the internal combustion engine when the clutch is engaged, and suppressing deterioration in fuel efficiency.

Preferably, the control device for the vehicle further includes a slope sensing unit sensing a slope of a lane on which the vehicle runs. The internal combustion engine control unit calculates the running resistance in accordance with the sensed slope.

In an embodiment of the invention, when the vehicle runs on a climbing lane with a steep slope at a low speed, running resistance is increased, and hence, by controlling the internal combustion engine such that the torque corresponding to the driving force larger than the additional value obtained by adding the frictional resistance and the increased running resistance is produced, it is possible to produce the torque not causing a stop of the internal combustion engine. As a result, stalling of the internal combustion engine can be prevented when the clutch is completely engaged.

Preferably, the control unit controls the actuator such that the engaging portion is brought into any of the engaged state, a released state, and the semi-engaged state in accordance with a state of the vehicle, when it is not determined that the temperature of the engaging portion is not lower than the predetermined temperature.

In an embodiment of the invention, if it is not determined that the temperature of the engaging portion is not lower than the predetermined temperature, the control unit can control the actuator according to the state of the vehicle. Even if the actuator is controlled such that the engaging portion is brought into the semi-engaged state according to the state of the vehicle, the functioning of the clutch is not deteriorated because the clutch is not in an overheated state.

Preferably, the determination unit determines whether or not the temperature of the engaging portion is not lower than the predetermined temperature, based on an amount of heat generated at the engaging portion.

In an embodiment of the invention, when the engaging portion is brought into the semi-engaged state, heat is generated by slippage at the engaging portion, and hence by estimating the amount of heat generated at the engaging portion in the semi-engaged state, it is possible to estimate the temperature of the engaging portion, which temperature is raised by the generated heat. Accordingly, it is possible to determine whether or not the temperature of the engaging portion is not lower than the predetermined temperature.

Preferably, the determination unit determines whether or not the temperature of the engaging portion is not lower than the predetermined temperature, based on a duration of the semi-engaged state.

In an embodiment of the invention, when the engaging portion is brought into the semi-engaged state, heat is generated by slippage at the engaging portion, and hence by measuring the duration of the semi-engaged state, it is possible to estimate the temperature of the engaging portion, which temperature is raised by the generated heat. Accordingly, it is possible to determine whether or not the temperature of the engaging portion is not lower than the predetermined temperature.

Preferably, the determination unit determines whether or not the temperature of the engaging portion is not lower than the predetermined temperature, based on a degree of engagement of the engaging portion as well as the duration.

In an embodiment of the invention, the determining unit can determine whether or not the temperature of the engaging portion is not lower than the predetermined temperature, based on the degree of engagement of the engaging portion (e.g. a stroke of a release shaft), as well as the duration. If the engaging portion is brought into the semi-engaged state, an amount of generated heat varies depending on the degree of engagement. Accordingly, by considering the degree of engagement as well as the duration, it is possible to determine with high accuracy whether or not the temperature of the engaging portion is not lower than the predetermined temperature.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a control block diagram showing a vehicle incorporating a control device for the vehicle according to an embodiment.
Fig. 2 is a drawing that shows a clutch controlled by the control device for the vehicle according to the present embodiment.
Fig. 3 is a flowchart showing a control structure of a program executed in an ECU, which is the control device for the vehicle according to the present embodiment.
Fig. 4 is a drawing that shows the relationship between a vehicle speed and a driving force.
Fig. 5 is a drawing that shows the relationship between an engine revolution speed and an engine torque.
Fig. 6 is a drawing that shows a configuration of the clutch actuated by hydraulic pressure.

### DESCRIPTION OF THE PREFERRED EMBODIMENTS

An embodiment of the present invention will hereinafter be described with reference to the drawings. In the description below, the same parts are denoted by the same reference characters, and have the same names and functions. Accordingly, the detailed description thereof will not be repeated.

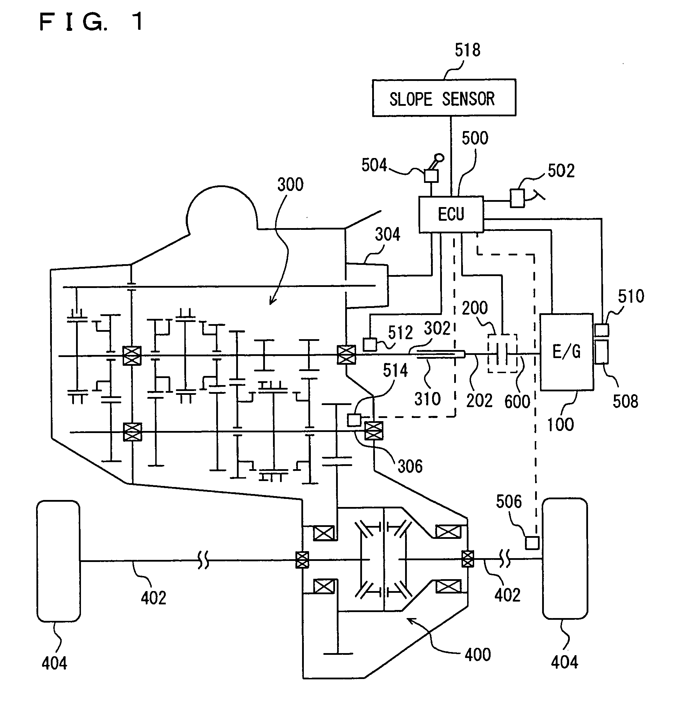

Referring to Fig. 1, a vehicle incorporating a control device for a vehicle according to the present embodiment is described. The vehicle runs by a driving force generated at an internal combustion engine (hereinafter referred to as an engine) 100 being transmitted to a driving wheel 404 through a clutch 200, a transmission 300, a differential gear 400, and a drive shaft 402. Engine 100, clutch 200, and transmission 300 are controlled by an Electronic Control Unit (ECU) 500. The control device for the vehicle according to the present embodiment is implemented by, for example, a program executed at ECU 500.

Engine 100 is a gasoline engine. A diesel engine may be used instead of the gasoline engine. Clutch 200 is coupled to a crankshaft 600 of engine 100. A clutch output shaft 202 is coupled to an input shaft 302 of transmission 300 with a spline 310 interposed therebetween.

Transmission 300 is configured with a normally-engaged type gear train. In transmission 300, a gear is selected by a shift fork shaft being slid by an actuator 304. Actuator 304 may be actuated by hydraulic pressure or electric power. A gear may be selected by an actuator using a direct cylinder.

A signal is transmitted to ECU 500 from each of an accelerator pedal position sensor 502, a position sensor 504, a vehicle speed sensor 506, a crank position sensor 510 provided to face a periphery of timing rotor 508, an input shaft revolution speed sensor 512, and an output shaft revolution speed sensor 514.

Accelerator pedal position sensor 502 detects an accelerator pedal position of an accelerator pedal. Position sensor 504 detects a shift position of a shift lever. Vehicle speed sensor 506 detects a vehicle speed. Crank position sensor 510 detects an engine revolution speed Ne. Input shaft revolution speed sensor 512 detects a revolution speed Ni of input shaft 302 of transmission 300. Output shaft revolution speed sensor 514 detects a revolution speed NO of output shaft 306 of transmission 300. Slope sensor 518 detects a slope of a lane. Slope sensor 518 is not particularly limited as long as it can detect a slope of a lane, and a G sensor, for example, is used.

ECU 500 performs arithmetic processing based on the signal transmitted from each of the sensors, a program and a map stored in a memory (now shown), and others. ECU 500 thereby controls engine 100, clutch 200, and transmission 300.

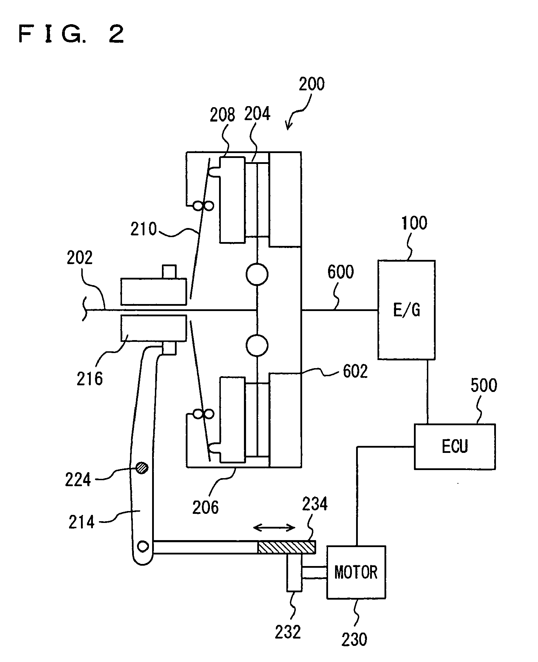

Referring to Fig. 2, clutch 200 will further be described. Clutch 200 is a dry-type single plate friction clutch. As shown in Fig. 2, clutch 200 includes a clutch output shaft 202, a clutch disk 204 installed at clutch output shaft 202, a clutch housing 206, a pressure plate 208 installed at clutch housing 206, a diaphragm spring 210, a release fork 214, and a release sleeve 216.

Diaphragm spring 210 biases pressure plate 208 to the right in Fig. 2, and thereby clutch disk 204 is pressed against a flywheel 602 attached to a crankshaft 600 of engine 100, so that clutch 200 is engaged.

Release fork 214 is provided such that it rotates with a fulcrum 224 set as a center. One end of release fork 214 is coupled to one end of a release shaft 234. The other end of release fork 214 is provided to abut against release sleeve 216. Release shaft 234 moves to the left in Fig. 2, thereby release fork 214 rotates with fulcrum 224 set as a center. The turning force causes release sleeve 216, which abuts against the other end of release fork 214, to move to the right in Fig. 2.

When release sleeve 216 moves to the right in Fig. 2, an inner end portion of diaphragm spring 210 moves to the right in Fig. 2. When the inner end portion of diaphragm spring 210 moves to the right in Fig. 2, an outer end portion of diaphragm spring 210 moves to the left in Fig. 2. At that time, a force with which diaphragm spring 210 presses pressure plate 208 is reduced, and hence clutch disk 204 and flywheel 602 are separated, so that clutch 200 is brought into a released state.

The other end of release shaft 234 is coupled to a motor 230. Release shaft 234 is moved to the left and to the right in Fig. 2, by motor 230 being driven. Release shaft 234 and motor 230 are coupled by, for example, a worm gear 232. In other words, motor 230 rotates worm gear 232, so that release shaft 234 moves to the left and to the right in Fig. 2 (in the direction of an arrow).

Motor 230 is controlled by ECU 500. Furthermore, a sensor sensing a position and a revolution speed of a rotor of motor 230 is provided in motor 230. ECU 500 receives a signal transmitted from the sensor. Based on the received signal, ECU 500 calculates a stroke of release shaft 234. Based on the calculated stroke, ECU 500 detects whether clutch 200 is in a released state, an engaged state, or a semi-engaged state. Instead of the sensor sensing a revolution speed of motor 230, a stroke sensor may be used to sense a stroke of release shaft 234.

Here, the "released state" refers to a state in which power is not transmitted between clutch disk 204 and flywheel 602. The "engaged state" refers to a state in which clutch disk 204 and flywheel 602 rotate integrally. The "semi-engaged state" refers to a state in which one of clutch disk 204 and the flywheel rotates with respect to the other of clutch disk 204 and the flywheel as they cause slippage (i.e. a rotational difference) therebetween.

When the vehicle as described above starts moving, ECU 500 controls motor 230 such that clutch 200 is brought into the semi-engaged state from the released state. In other words, release shaft 234 is controlled to move to an engagement side by a predetermined stroke from a position corresponding to the released state, so that clutch disk 204 and flywheel 602 are brought into the semi-engaged state. At that time, a force with which diaphragm spring 210 presses pressure plate 208 is smaller than that in the engaged state, and hence one of clutch disk 204 and flywheel 602 rotates with respect to the other of clutch disk 204 and flywheel 602 as they cause slippage. ECU 500 controls motor 230 such that clutch 200 is brought into the semi-engaged state, and controls the engine to increase an output thereof, so that smooth start is implemented. When a certain vehicle speed is reached, ECU 500 controls motor 230 such that clutch 200 is brought into the engaged state from the semi-engaged state.

In contrast, when the vehicle runs at a low speed, ECU 500 controls motor 230 such that clutch 200 is brought into the semi-engaged state from the engaged state, so as to prevent stalling of engine 100. At that time, release shaft 234 is controlled to move to a release side by a predetermined stroke from a position corresponding to the engaged state, so that clutch disk 204 and flywheel 602 are brought into the semi-engaged state. At that time, a force with which diaphragm spring 210 presses pressure plate 208 is reduced, and hence one of clutch disk 204 and flywheel 602 rotates with respect to the other of clutch disk 204 and flywheel 602 as they cause slippage. Accordingly, a revolution speed that does not cause stalling can be ensured in engine 100. When the vehicle stops, ECU 500 controls motor 230 such that clutch 200 is brought into the released state from the semi-engaged state. Alternatively, when a depressed amount of an accelerator pedal is increased, ECU 500 controls motor 230 such that clutch 200 is brought into the engaged state from the semi-engaged state.

When such a vehicle repeatedly starts and stops, or runs at a low speed continuously or intermittently, the semi-engaged state between clutch disk 204 and flywheel 602 continues, which causes continuous generation of heat by slippage. Accordingly, the temperature of the engaging portion between clutch disk 204 and flywheel 602 may be raised to cause an overheating state. When the engaging portion between clutch disk 204 and flywheel 602 is in an overheating state, a component of clutch 200 may be influenced thereby, which may result in functional deterioration in clutch 200.

Therefore, it may be possible to suppress heat generation by bringing the clutch into the engaged state from the semi-engaged state to suppress slippage. However, if a load imposed on driving wheel 404 varies as in the case where the vehicle runs on a climbing lane with a steep slope, an output torque of engine 100 may become insufficient, which may result in stalling of engine 100.

Accordingly, the present invention is characteristic in that, when it is determined that the temperature of the engaging portion of clutch 200 is not lower than the predetermined temperature, ECU 500 controls motor 230 such that clutch 200 is brought into the engaged state from the semi-engaged state, and controls engine 100 so that a torque at least not causing stalling of engine 100 is produced.

Specifically, ECU 500 estimates the temperature of the engaging portion based on a duration of the semi-engaged state, an amount of heat generated at the engaging portion, and the like. If the estimated temperature is not lower than the predetermined temperature, ECU 500 controls motor 230 such that clutch 200 is brought into the engaged state from the semi-engaged state.

ECU 500 calculates running resistance of the vehicle based on a slope of a lane on which the vehicle runs, and others. ECU 500 controls engine 100 such that a torque corresponding to a driving force larger than an additional value obtained by adding running resistance of the vehicle and frictional resistance on a power transmission path from engine 100 to driving wheel 404 is produced. In other words, ECU 500 controls an output torque of engine 100 such that a driving force larger than the additional value obtained by adding running resistance and frictional resistance is generated at driving wheel 404.

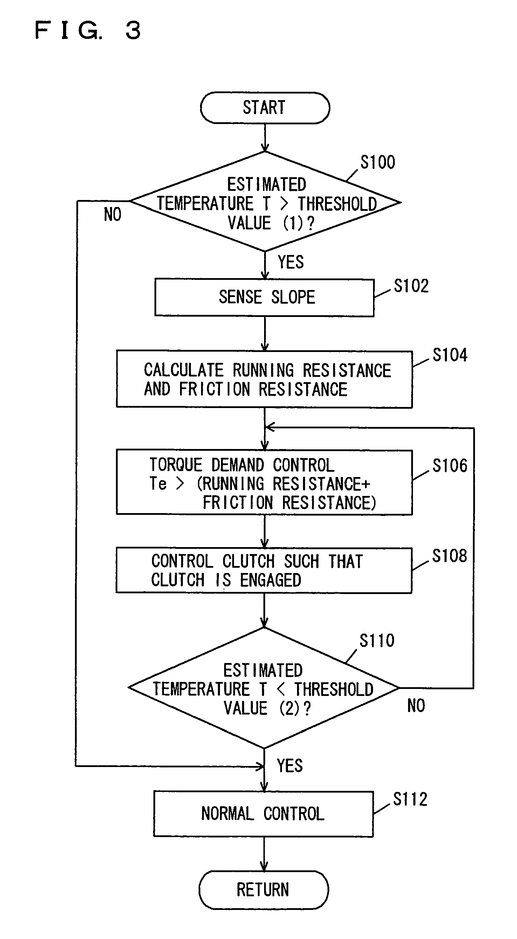

Referring to Fig. 3, a control structure of a program executed at ECU 500, which is the control device for the vehicle according to the present embodiment, will be described.

In step (hereinafter referred to as S) 100, ECU 500 determines whether or not an estimated temperature T of clutch 200 is higher than a threshold value (1). The "threshold value (1)" is a predetermined temperature, and not particularly limited as long as it is not larger than the upper limit value of an allowable temperature of clutch 200.

In the present embodiment, ECU 500 estimates the temperature of the engaging portion based on, for example, an amount of heat generated at clutch 200. Specifically, ECU 500 calculates the amount of generated heat by using an empirical formula empirically derived from a slippage amount at the engaging portion. The temperature of the engaging portion is estimated from the calculated amount of generated heat.

If a degree of engagement (a stroke of release shaft 234) as well as the slippage amount is considered to calculate an amount of generated heat, the temperature of the engaging portion can be estimated with higher accuracy. Furthermore, if an amount of dissipated heat at the engaging portion is also considered in addition to the amount of generated heat, the temperature of the engaging portion can be estimated with much higher accuracy. The slippage amount at the engaging portion in clutch 200 corresponds to a difference between a revolution speed of crankshaft 600 (flywheel 602) and a revolution speed of clutch output shaft 202. The amount of generated heat may be calculated by using a map and the like instead of an empirical formula.

ECU 500 may be configured such that it estimates the temperature based on a duration of the semi-engaged state. For example, ECU 500 may be configured such that it estimates that the temperature of the engaging portion is higher than threshold value (1) when a predetermined time has passed after clutch 200 was brought into the semi-engaged state. Alternatively, ECU 500 may be configured such that it estimates the temperature of the engaging portion based on a degree of engagement as well as a duration of the semi-engaged state. For example, ECU 500 may also be configured such that it estimates that the temperature of the engaging portion is higher than threshold value (1) when a time set according to the degree of engagement has passed after clutch 200 was brought into the semi-engaged state. Furthermore, ECU 500 may also be configured such that it estimates the temperature of the engaging portion based on the temperature of the component of clutch 200. If the estimated temperature of clutch 200 is higher than threshold value (1) (YES in S100), the process proceeds to S 102. If not so (NO in S 100), the process proceeds to S 112.

In S102, ECU 500 receives a signal indicative of a slope of the lane from slope sensor 518. In S 104, running resistance and friction resistance are calculated. The running resistance is calculated from a map in the present embodiment. The map refers to a map showing the relationship between running resistance of the vehicle and vehicle speed in accordance with a slope. The map of running resistance is stored in a memory of ECU 500 beforehand. In the present embodiment, the map refers to a map showing the relationship between vehicle speed and running resistance at, for example, each of a 0% slope, a 10% slope, and a 20% slope. ECU 500 calculates running resistance from the map, based on the sensed slope and vehicle speed. The running resistances at 0% - 10% slopes and 10% - 20% slopes may be calculated by, for example, linearly interpolating the running resistances at the 0% slope and the 10% slope, and the running resistances at the 10% slope and the 20% slope, respectively.

The friction resistance (frictional resistance) is also calculated from a map in the present embodiment. The friction resistance refers to frictional resistance on a power transmission path from engine 100 to driving wheel 404, and varies depending on a selected gear and a vehicle speed. The map refers to a map showing the relationship between vehicle speed and friction resistance, and is created for each gear. The map of friction resistance is stored in a memory of ECU 500 beforehand. Instead of the map of running resistance and the map of friction resistance, a table or an empirical formula may be used to calculate running resistance and friction resistance.

In S 106, ECU 500 performs torque demand control. Specifically, ECU 500 controls an output of engine 100 such that a driving force Tk larger than an additional value obtained by adding the calculated running resistance and the calculated friction resistance is produced at driving wheel 404. In other words, ECU 500 controls a throttle opening position and a fuel injection amount such that engine torque Te corresponding to driving force Tk is produced.

In S108, ECU 500 controls motor 230 such that clutch 200 is brought into the engaged state. In S110, ECU 500 determines whether or not an estimated temperature T of clutch 200 is lower than a threshold value (2). Threshold value (2) is a predetermined temperature, and is not particularly limited as long as it is not larger than threshold value (1). Preferably, threshold value (2) smaller than threshold value (1) is desirable. By doing so, hunting in control can be prevented. If estimated temperature T of clutch 200 is lower than threshold value (2) (YES in S108), the process proceeds to step S110. If not so (No in S108), the process returns to S104.

In S 110, ECU 500 performs normal control. Specifically, ECU 500 controls engine 100 and clutch 200 based on a state of the vehicle and a state of manipulation by the driver.

An operation of ECU 500, which is the control device for the vehicle according to the present embodiment, will be described. The operation is based on the structure and flowchart as described above.

Assume the case where, when the vehicle runs on a lane having a 20% slope at a low speed, for example, clutch 200 is controlled to be brought into the semi-engaged state from the engaged state in accordance with decrease in vehicle speed or revolution speed of engine 100. If the semi-engaged state is maintained continuously or intermittently and estimated temperature T of clutch 200 exceeds the predetermined threshold value (1) (YES in S100), slope sensor 518 senses the slope of the lane (S102). Running resistance corresponding to the sensed slope of the lane and frictional resistance corresponding to the vehicle speed are calculated (S104). Then torque demand control is performed such that engine torque Te larger than an additional value obtained by adding the running resistance and the frictional resistance is produced (S106).

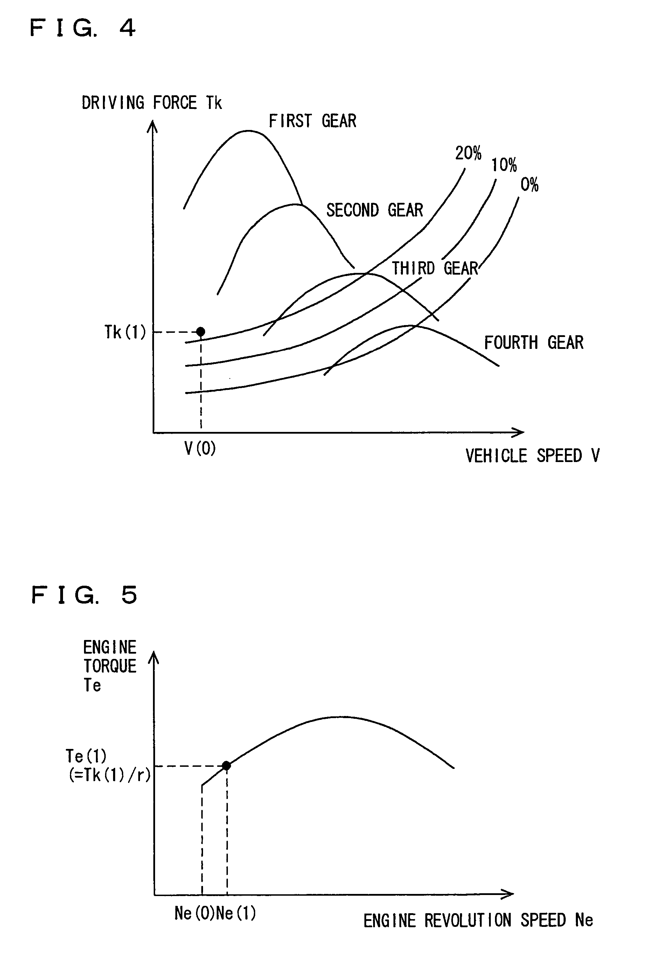

Specifically, since the sensed slope of the lane is 20%, running resistance of the vehicle when the lane has a 20% slope is calculated from a graph showing the relationship between a vehicle speed and a driving force in Fig. 4. In other words, running resistance to be exhibited when the vehicle speed sensed by vehicle speed sensor 506 is V(0) and at the 20% slope is calculated. Furthermore, friction resistance to be exhibited when the vehicle speed is V(0) is calculated from the map. Then an additional value to be obtained by adding the running resistance and the friction resistance is calculated.

ECU 500 calculates a driving force Tk(1) larger than the additional value obtained by adding the running resistance and the friction resistance when the vehicle speed is V(0). This driving force Tk(1) is a driving force for the vehicle required for preventing stalling of engine 100. Driving force Tk(1) is not particularly limited as long as it satisfies an expression "Tk(1) > running resistance + friction resistance".

ECU 500 calculates a torque Te(1) required in engine 100, based on the calculated driving force Tk(1) and a reduction ratio r between engine 100 and driving wheel 404. Te(1) is calculated from an expression "Te(1) = Tk(1) / r".

ECU 500 controls engine 100 such that the required torque Te(1) is produced along an output curve of engine 100 as shown in Fig. 5. In other words, ECU 500 controls a fuel injection amount and a throttle opening position such that the revolution speed of engine 100 is at least equal to Ne(1). Note that even when torque Te(1) is produced at engine 100, engine 100 may stall if engine 100 has a low revolution speed. ECU 500 therefore controls the revolution speed of engine 100 such that the revolution speed is higher than a predetermined revolution speed Ne(0).

In clutch 200, motor 230 is controlled such that clutch disk 204 and flywheel 602 are completely engaged with each other (S108). At that time, if estimated temperature T is not lower than threshold value (2) (NO in S 110), clutch 200 remains in the engaged state, and engine 100 is controlled such that a torque corresponding to a driving force larger than the additional value obtained by adding the running resistance and the friction resistance is produced (S106).

If estimated temperature T is lower than threshold value (2) (YES in S 110), normal control is performed (S 112). In other words, clutch 200 is controlled to be brought into any of the released state, the semi-engaged state, and the engaged state, in accordance with the driver's accelerator manipulation, and the state of the vehicle. For example, when the vehicle runs at a low vehicle speed equal to or lower than a predetermined speed, clutch 200 is controlled to be brought into the semi-engaged state.

With the control device for the vehicle according to the present embodiment as described above, when the vehicle runs on a climbing lane with a steep slope at a low speed, running resistance is increased, and hence if the engine is controlled such that a torque corresponding to a driving force larger than the additional value obtained by adding the running resistance and the friction resistance according to the slope is produced, a torque not causing the engine stop can be produced. As a result, engine stall is prevented when the clutch is engaged. Furthermore, if it is determined that the estimated temperature of the clutch is not lower than the predetermined temperature, the clutch is controlled to be brought into the engaged state from the semi-engaged state. Accordingly, heat generation caused by slippage can be suppressed so that functional deterioration of the clutch caused by overheat can be suppressed. Accordingly, it is possible to provide a control device for a vehicle, the control device suppressing overheat of the clutch and preventing stalling of the internal combustion engine.

Engine stall can be prevented if a torque corresponding to a driving force at least larger than the additional value obtained by adding running resistance and friction resistance is produced, and hence no excessive torque is produced. It is therefore possible to provide a control device for a vehicle, the control device appropriately increasing an output of the internal combustion engine when the clutch is engaged, and suppressing deterioration in fuel efficiency.

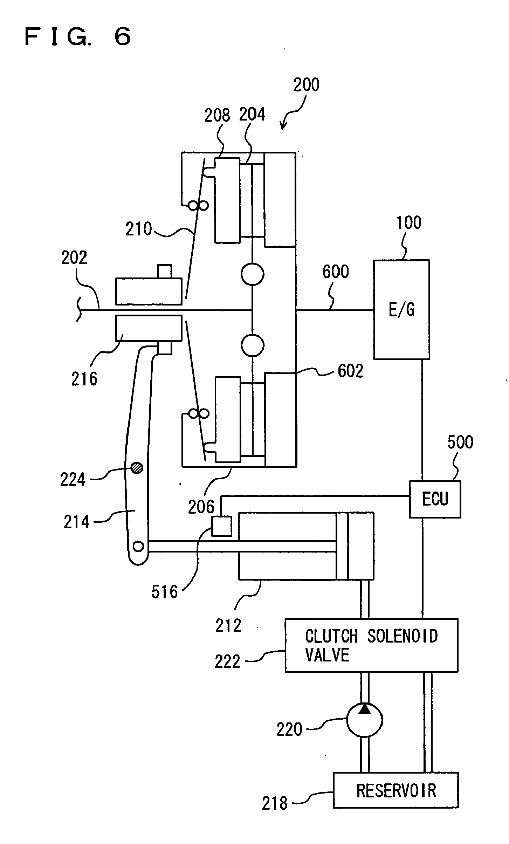

In the present embodiment, release shaft 234 is moved by motor 230 so that clutch 200 is brought into the released state, the semi-engaged state, or the engaged state. However, the present embodiment is not particularly limited to use motor 230 as a power source. In other words, as shown in Fig. 6, a clutch release cylinder may be provided instead of release shaft 234.

In other words, as shown in Fig. 6, a clutch release cylinder 212 is actuated by being supplied with hydraulic pressure of hydraulic oil pumped up from a reservoir 218 by a hydraulic pressure pump 220, through a clutch solenoid valve 222. Clutch solenoid valve 222 switches between supply and discharge of hydraulic pressure for clutch release cylinder 212. Clutch solenoid valve 222 is controlled by ECU 500. Application of the present invention to such a configuration can also produce similar effects.

The present embodiment uses the torque demand control in which a required torque is calculated and the engine is controlled such that the calculated torque is produced, so as to prevent engine stall. However, the present embodiment is not particularly limited to such engine control. In other words, by calculating a required throttle opening position and controlling an operated amount of a throttle motor of the throttle valve such that the calculated throttle opening position is obtained so as to prevent engine stall, similar effects can also be obtained.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A control device for a vehicle incorporating an internal combustion engine (100), a transmission (300) receiving power transmitted from said internal combustion engine (100), a clutch (200) interposed between an output shaft (600) of said internal combustion engine (100) and an input shaft (302) of said transmission (300) to allow and interrupt torque transmission, and an actuator (230) controlling said clutch (200), comprising:
determination means (500) for determining whether or not a temperature of an engaging portion between said input shaft (302) and said output shaft (600) in said clutch (200) is not lower than a predetermined temperature;
control means (500) for controlling said actuator (230) such that said engaging portion is brought into an engaged state, when it is determined that the temperature of said engaging portion is not lower than the predetermined temperature while said engaging portion is in a semi-engaged state; and
internal combustion engine control means (500) for controlling said internal combustion engine (100) such that a torque at least not causing a stop of said internal combustion engine (100) is produced, when said actuator (230) is controlled such that said engaging portion is brought into the engaged state.

2. The control device for the vehicle according to claim 1, wherein said internal combustion engine control means (500) includes means for controlling said internal combustion engine (100) such that a torque corresponding to a driving force at least larger than an additional value obtained by adding running resistance of said vehicle and frictional resistance on a power transmission path from said internal combustion engine (100) to a driving wheel (404) is produced.

3. The control device for the vehicle according to claim 2, further comprising slope sensing means (518) for sensing a slope of a lane on which the vehicle runs, wherein said internal combustion engine control means (500) includes means for calculating said running resistance in accordance with the sensed slope.

4. The control device for the vehicle according to any of claims 1-3, wherein said control means (500) includes means for controlling said actuator (230) such that said engaging portion is brought into any of the engaged state, a released state, and the semi-engaged state in accordance with a state of said vehicle, when it is not determined that the temperature of said engaging portion is not lower than the predetermined temperature.

5. The control device for the vehicle according to claim 1, wherein said determination means (500) includes means for determining whether or not the temperature of said engaging portion is not lower than the predetermined temperature, based on an amount of heat generated at said engaging portion.

6. The control device for the vehicle according to claim 1, wherein said determination means (500) includes means for determining whether or not the temperature of said engaging portion is not lower than the predetermined temperature, based on a duration of said semi-engaged state.

7. The control device for the vehicle according to claim 6, wherein said determination means (500) includes means for determining whether or not the temperature of said engaging portion is not lower than the predetermined temperature, based on a degree of engagement of said engaging portion as well as said duration.

8. A method of controlling a vehicle incorporating an internal combustion engine (100), a transmission (300) receiving power transmitted from said internal combustion engine (100), a clutch (200) interposed between an output shaft (600) of said internal combustion engine (100) and an input shaft (302) of said transmission (300) to allow and interrupt torque transmission, and an actuator (230) controlling said clutch (200), comprising the steps of:
determining whether or not a temperature of an engaging portion between said input shaft (302) and said output shaft (600) in said clutch (200) is not lower than a predetermined temperature;
controlling said actuator (230) such that said engaging portion is brought into an engaged state, when it is determined that the temperature of said engaging portion is not lower than the predetermined temperature while said engaging portion is in a semi-engaged state; and
controlling said internal combustion engine (100) such that a torque at least not causing a stop of said internal combustion engine (100) is produced, when said actuator (230) is controlled such that said engaging portion is brought into the engaged state.

9. The method of controlling the vehicle according to claim 8, wherein said step of controlling the internal combustion engine includes a step of controlling said internal combustion engine (100) such that a torque corresponding to a driving force at least larger than an additional value obtained by adding running resistance of said vehicle and frictional resistance on a power transmission path from said internal combustion engine (100) to a driving wheel (404) is produced.

10. The method of controlling the vehicle according to claim 9, further comprising a step of sensing a slope of a lane on which the vehicle runs, wherein said step of controlling the internal combustion engine includes a step of calculating said running resistance in accordance with the sensed slope.

11. The method of controlling the vehicle according to any of claims 8-10, wherein said step of controlling the actuator includes a step of controlling said actuator (230) such that said engaging portion is brought into any of the engaged state, a released state, and the semi-engaged state in accordance with a state of said vehicle, when it is not determined that the temperature of said engaging portion is not lower than the predetermined temperature.

12. The method of controlling the vehicle according to claim 8, wherein said step of determining includes a step of determining whether or not the temperature of said engaging portion is not lower than the predetermined temperature, based on an amount of heat generated at said engaging portion.

13. The method of controlling the vehicle according to claim 8, wherein said step of determining includes a step of determining whether or not the temperature of said engaging portion is not lower than the predetermined temperature, based on a duration of said semi-engaged state.

14. The method of controlling the vehicle according to claim 13, wherein said step of determining includes a step of determining whether or not the temperature of said engaging portion is not lower than the predetermined temperature, based on a degree of engagement of said engaging portion as well as said duration.
